Europäisches Patentamt

European Patent Office

Office européen des brevets

(19)

(11) Veröffentlichungsnummer : **0 067 451 B1**

(12) **EUROPÄISCHE PATENTSCHRIFT**

(45) Veröffentlichungstag der Patentschrift :
09.10.85

(21) Anmeldenummer : 82105278.4

(22) Anmeldetag : 16.06.82

(51) Int. Cl.⁴ : **F 27 B   9/26**, F 27 D   3/12, C 04 B 33/32

(54) **Tunnelofenwagen.**

(30) Priorität : 16.06.81 DE 3123896

(43) Veröffentlichungstag der Anmeldung :
22.12.82 Patentblatt 82/51

(45) Bekanntmachung des Hinweises auf die Patenterteilung : 09.10.85 Patentblatt 85/41

(84) Benannte Vertragsstaaten :
AT CH FR GB IT LI NL

(56) Entgegenhaltungen :
DE-B- 2 203 360
GB-A-   538 137
GB-A-   561 486
GB-A-   644 473

(73) Patentinhaber : Peter, Hubertus, Dr.
Paracelsusstrasse 44
D-6650 Homburg/Saar (DE)

Fleischmann, Werner, Ing.-Grad.
Fuchshohl 103
D-6000 Frankfurt a.M. 50 (DE)

Kehl, Karl Dieter
Tulpenweg 9
D-5000 Köln 71 (DE)

(72) Erfinder : Peter, Hubertus, Dr.
Paracelsusstrasse 44
D-6650 Homburg/Saar (DE)
Erfinder : Fleischmann, Werner, Ing. grad.
Fuchshohl 103
D-6000 Frankfurt a.M. 50 (DE)

(74) Vertreter : Boecker, Carl Otto, Dipl.-Ing.
Dr. Ehrhardt-Strasse 31
D-6670 St. Ingbert (Saar) (DE)

## Beschreibung

Die Erfindung betrifft einen Tunnelofenwagen mit die keramischen Plateauplatten tragenden hohlen keramischen Säulen, die in von dem stählernen Wagenboden abgestützte Hülsen einsteckbar sind. Dies ist aus der DE-B-2 203 360 bekannt, jedoch bestehen die Hülsen nach dem Stand der Technik aus Flußstahlblech und sind deswegen mit Freiräumen umgeben, da die Hülsen unterhalb einer Wärmeschutzschicht angeordnet sind. Die Hülsen werden einfach mit ihrem unteren Stirnrand auf den stählernen Wagenboden aufgesetzt und werden in ihrem Rastermaß durch Verschweißen mit die Wärmeschutzschicht tragenden Metallblechen fixiert. Auch ist es bekannt, die hohlen keramischen Säulen oder zumindest die unteren Schüsse von mehrteiligen Säulen in Isolierbeton einzugießen, der den stählernen Wagenboden gegen die Ofenwärme isoliert. Damit sind jedoch die Säulen fixiert.

Die Erfindung verwendet die bodenseitigen Hülsen zum Einstecken von hohlen keramischen Säulen nach der DE-B-2 203 360, um den regalartigen Tunnelofenaufbau in der Höhe variabel gestalten zu können, was die Höhenlage der einzigen oder der unteren keramischen Plateauplatte anbelangt, jedoch ist die Aufgabe gestellt, zur Einsparung von Bauhöhe des Aufbaues die Hülsen in die aufzuheizende thermischen Masse miteinzubeziehen und dafür zu sorgen, daß gegenüber dem stählernen Wagenboden eine Wärmeisolation erhalten wird. Diese Aufgabe wird gemäß der Erfindung dadurch gelöst, daß die Hülsen aus keramischem Werkstoff bestehen, unten durch Ringscheiben verschlossen und in Schaumbeton eingegossen sind. Die Säulen sind nach wie vor auswechselbar, sodaß wahlweise Säulen verschiedener Länge in die Hülsen eingesteckt werden können, wobei die Hülsen durch den sie umgebenden Schaumbeton in dem gewünschten Rastermaß fixiert sind. Die Einbettung der Hülsen in den Schaumbeton bedeutet gegenüber dem Stand der Technik eine Verminderung der Bauhöhe des Tunnelofenaufbaues. Dadurch, daß die Hülsen und ihre bodenseitigen Ringscheiben aus keramischem Material bestehen, tragen sie zur Wärmeisolation gegenüber dem stählernen Wagenboden bei.

In der Zeichnung ist ein Ausführungsbeispiel eines Tunnelofenwagens gemäß der Erfindung dargestellt, und zwar zeigen :

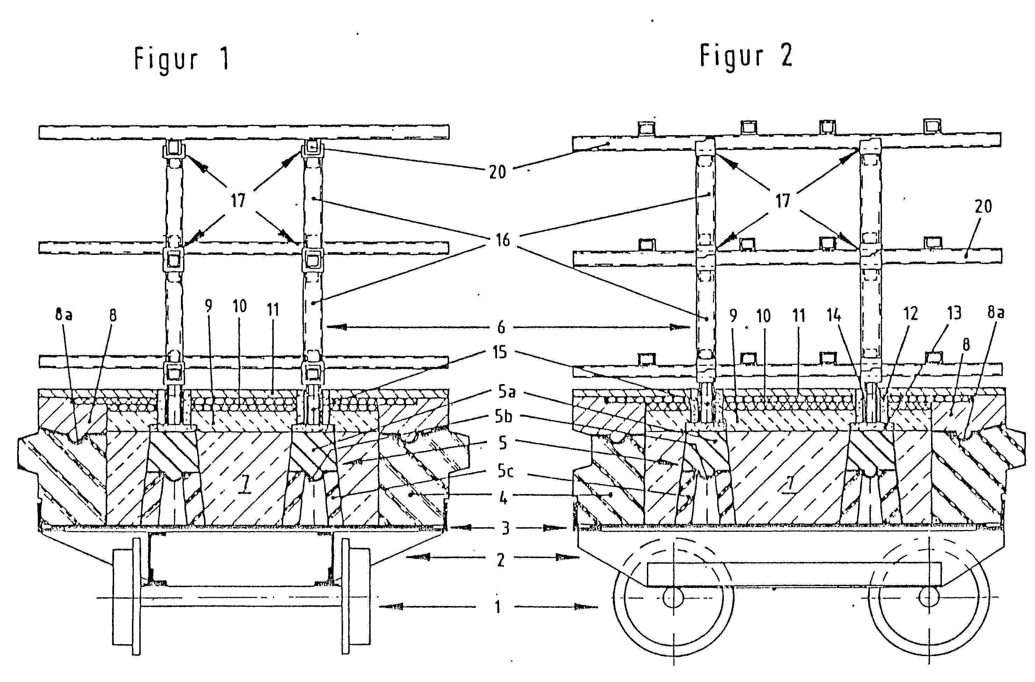

Figur 1  einen Querschnitt, und
Figur 2  einen Längsschnitt.

In bekannter Weise besteht der Unterwagen aus dem Fahrgestell 1 und dem Chassis 2 mit stählernem Boden 3. Dieser faßt und trägt im Ausführungsbeispiel einen Rahmen aus Randsteinen 4. Der Rahmen umgrentz mit dem Stahlboden 3 einen trogartigen Raum, in welchen, etwa unter Verwendung einer Paßschablone, die Stützen 5 für die Säulen 6 im richtigen Rastermaß gestellt sind, wonach der verbleibende Trograum mit Feuerleichtbeton 7 ausgegossen wurde, bündig abschließend mit den Oberkanten der Stützen 5 und der Randsteine 4, so daß die Stützen sich nicht mehr verschieben können. Sie bestehen aus einem Oberteil 5a von druckfestem Feuerbeton, welches mit einem Zentrierhöcker 5b in das hohle Unterteil 5c formschlüssig eingelassen ist.

Auf den Randsteinen 4 sitzen formschlüssig mit Nut- und Federverbindung 8a Formsteine 8 aus isolierendem Material, welche die obere Zustellung umschließen und teilweise tragen. Sie besteht aus Schichten von Schaumbeton 9, keramischen Fasermatten 10 und einer dünnen keramischen Deckplatte 11. Darin befinden sich Aussparungen 14, die durch keramische Hülsen 12 und damit zusammenhängende Ringscheiben 13 abgedeckt sind, durch welche die untersten Schüsse 15 der Säulen 6 auswechselbar eingreifen und auf den zugehörigen Stützenoberteilen 5a ruhen. Die Hülsen 12 mit den Ringscheiben 13 sind in den Schaumbeton 9 eingegossen.

Die untersten Schüsse 15 sind mit den nächstfolgenden Säulenschüssen 16 gekuppelt durch Kopfstücke 17, die je einen horizontalen hohlen keramischen Längsträger 20 für die nicht dargestellten ebenfalls keramischen Plateauplatten mit Bewegungsspiel tragen.

## Patentanspruch

Tunnelofenwagen mit die keramischen Plateauplatten tragenden hohlen keramischen Säulen (6, 15, 16), die in von dem stählernen Wagenboden (3) abgestützte Hülsen (12) einsteckbar sind, dadurch gekennzeichnet, daß die Hülsen (12) aus keramischem Werkstoff bestehen, unten durch Ringscheiben (13) verschlossen und in Schaumbeton (9) eingegossen sind.

## Claim

Tunnel kiln truck with hollow ceramic columns (6, 15, 16) supporting the ceramic plateau-trays and being inserted into sleeves which are supported by the steel-made ground (3) of the truck, characterized in that the sleeves (12) consisting of ceramic material are closed at their bottom by ring-shaped disks (13) and casted-in into foamed concrete.

## Revendication

Chariot de four à tunnel comportant des colonnes creuses en céramique (6, 15, 16) supportant des plaques de plateaux en céramique et qui peuvent être engagés dans des douilles (12) supportées par le plancher en acier (3) du chariot, caractérisé en ce que les douilles (12) sont réalisées en un matériau céramique, elles sont fermées par des disques circulaires (13) et elles sont noyées dans du béton cellulaire (9).

Figur 1                    Figur 2

0 067 451